# EUROPEAN PATENT SPECIFICATION

(11) **EP 1 798 476 B1**
(45) Date of publication and mention of the grant of the patent: **05.09.2012**
(21) Application number: 05767150.5
(22) Date of filing: 27.07.2005
(51) Int. Cl.: F24C 7/02

(54) **HEATING DEVICE**
HEIZVORRICHTUNG
DISPOSITIF DE CHAUFFAGE

(30) Priority: 02.11.2004 JP 2004318978; 02.11.2004 JP 2004318979; 13.12.2004 JP 2004359427
(43) Date of publication of application: 20.06.2007
(73) Proprietor: Panasonic Corporation, Kadoma-shi Osaka 571-8501 (JP)
(72) Inventor: IKEDA, Toshihisa, Shiromi 1-chome, Chuo-ku, Osaka-shi, Osaka 540-6319 (JP); KANAZAWA, Kiyoshi, Shiromi 1-chome, Chuo-ku, Osaka-shi, Osaka 540-6319 (JP)
(74) Representative: Grünecker, Kinkeldey, Stockmair & Schwanhäusser
(86) International application number: PCT/JP2005/013727
(87) International publication number: WO 2006/048964

(56) References cited:
- EP-A1- 1 174 667
- EP-A1- 1 193 584
- EP-A2- 1 172 752
- GB-A- 2 300 053
- JP-A- 8 291 914
- JP-A- 9 180 876
- JP-A- 11 230 544
- JP-A- 11 276 359
- JP-A- 2001 317 741
- JP-A- 2001 349 546
- JP-A- 2002 022 177
- JP-A- 2002 196 672
- JP-A- 2003 500 621
- JP-A- 2005 129 038
- JP-U- 64 041 002
- US-A- 6 124 583

## Description

### TECHNICAL FIELD

The present invention relates to heating devices such as microwave ovens used for cooking.

### BACKGROUND ART

Application of technology for noncontact information communications that involves writing information in wireless IC tags (hereinafter "IC tags") and reading it out has been increasing. As a part of this trend, attaching IC tags, which contain information on content and cooking methods or the like, to food containers or packages is being studied. One example of a heating device that cooks food under optimal conditions after reading the information in these IC tags is disclosed in Japanese Patent Unexamined Publication No. 2001-317741. This heating device has a reader for reading information in the IC tag. However, the reader has a high risk of being destroyed if it is exposed to strong electromagnetic waves used for heating.

EP 1 174 667 A1 relates to an automatic cold-storage system, a refrigerator, an automatic cooking system and a microwave oven. The microwave oven is capable of cooking the food contained in a food package under optimal cooking conditions on the basis of the information about the contents of the food package. The food package is provided with a non-contact IC tag storing information about the food contained in the food package, wherein the microwave oven is provided with an IC tag reader for reading the information from the non-contact IC tag. Thereby, the document aims at avoiding cooking food under wrong cooking conditions.

It is further shown, that the IC tag reader may be disposed on the outer surface of the front door of the microwave oven in order to allow holding the food package to the IC tag reader before putting same into the microwave oven. In this regard, it is also aimed at avoiding troublesome work for temporarily putting the food package into the microwave oven to read the information, taking out the food package and putting the food again into the microwave oven after removing the packaging of the food.

EP 1 172 752 A2 relates to a food information management system for automatic and intelligent cooking of processed food using a microwave cooker. The microwave cooker is provided with a read unit, which is placed outside the cooker or on the front panel, capable of reading food information from a non-contact IC tag which is attached to the processed food. Once the food package is held opposite to the read unit, food ID information is read and used as a key to retrieve food information about the processed food from a food database through the Internet. The food database then sends food information about the processed food to an output unit of the microwave cooker, wherein the output unit provides the food information to a display unit for displaying the food information.

### SUMMARY OF THE INVENTION

A heating device of the present invention includes a main body provided with an opening, a magnetron configured to generate electromagnetic waves for heating, a door configured to put in and taking out an object to be heated, a reader, and a barrier. The magnetron emits electromagnetic waves into the main body. The door covers the opening of the main body. The reader reads information contained in a wireless IC tag attached to the object to be heated. The barrier acts as a shield for the reader from the electromagnetic waves emitted by the magnetron when the door is closed, and breaks the shield for the reader when the door is opened. This structure avoids problems of destroying the reader by strong electromagnetic waves for heating.

### BRIEF DESCRIPTION OF DRAWINGS

Fig. 1 is a functional block diagram of a microwave oven in accordance with exemplary embodiments of the present invention.
Fig. 2 is a perspective view of the microwave oven in accordance with the first exemplary embodiment of the present invention.
Fig. 3 is a plan view of a door structure of the microwave oven shown in Fig. 2.
Fig. 4 is an enlarged view around a reader indicated by a dotted line in Fig. 3.
Fig. 5 is a perspective view of another structure of a microwave oven in the first exemplary embodiment of the present invention.
Fig. 6 is a perspective plan view of a structure around a door and an opening in a main body of the microwave oven shown in Fig. 5.
Fig. 7 is a perspective view of still another structure of a microwave oven in the first exemplary embodiment of the present invention.
Fig. 8 is a perspective plan view of a structure around a door and an opening of a main body of the microwave oven shown in Fig. 7.
Fig. 9 is a perspective view of still another structure of a microwave oven in the first exemplary embodiment of the present invention.
Fig. 10 is a perspective plan view of a structure around a door and an opening of a main body of the microwave oven shown in Fig. 9.
Fig. 11 is a perspective view of still another structure of a microwave oven in the first exemplary embodiment of the present invention.
Fig. 12 is a plan view of a structure around a door and an opening of a main body of the microwave oven shown in Fig. 11.
Fig. 13 is a plan view around an opening of a main body in still another structure of a microwave oven in the first exemplary embodiment of the present invention.
Fig. 14 is a perspective view of a microwave oven in accordance with example.
Fig. 15 is a sectional view of an open state of a door of the microwave oven shown in Fig. 14.
Fig. 16 is a sectional view of a closed state of the door of the microwave oven shown in Fig. 14.
Fig. 17 is a functional block diagram of the microwave oven in the example.
Fig. 18 is a sectional view of a key part of another structure of a barrier of a microwave oven in the second exemplary embodiment of the present example.
Fig. 19A is a plan view of a key part of still another structure of a barrier of a microwave oven in accordance with the example.
Fig. 19B is a sectional view of a key part of the still another structure of the barrier shown in Fig. 19A.

### REFERENCE MARKS IN THE DRAWINGS

- 1: Main body
- 2: Door
- 3: Reader
- 4: Opening and closing sensor
- 5, 5A, 5B, 5C: Barrier
- 6: Controller
- 7: Magnetron
- 8: Opening
- 9: Object to be heated
- 10: Wireless IC tag
- 11: Attachment
- 12: Joint
- 13: Spring
- 14: Partition plate
- 15: Cooking space
- 16: Window
- 17: Slide
- 18: Moving mechanism

### DETAILED DESCRIPTION OF PREFERRED EMBODIMENTS

### FIRST EXEMPLARY EMBODIMENT

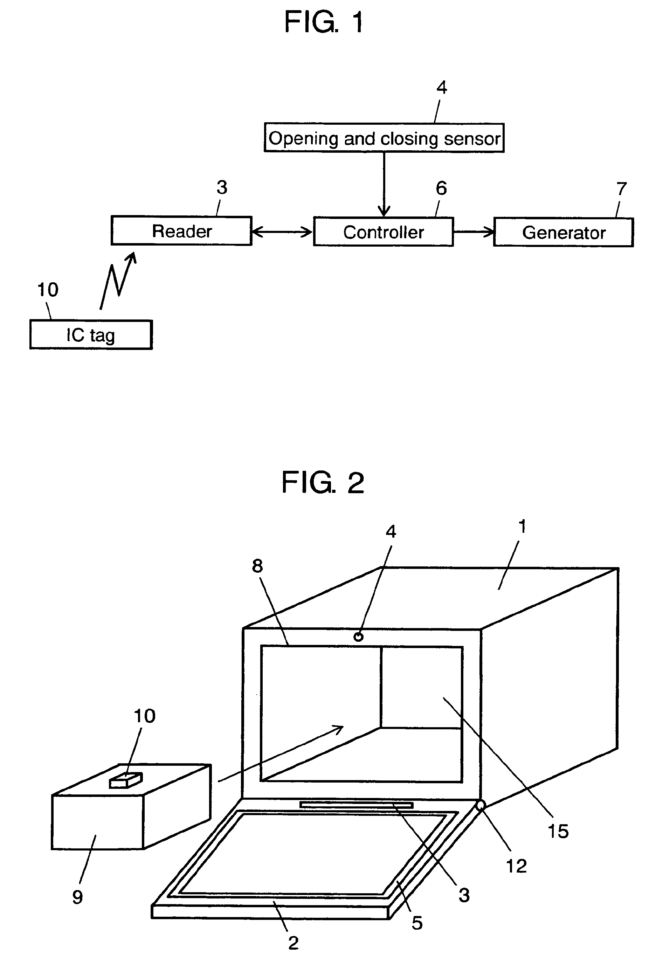

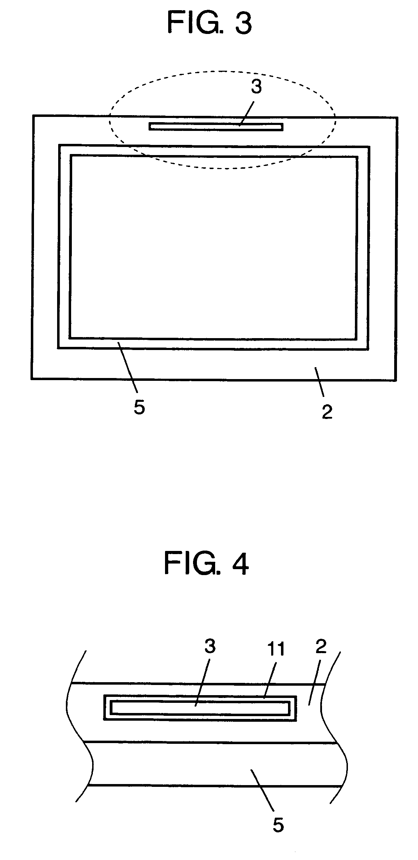

Fig. 1 is a functional block diagram of a structure of a microwave oven which is a heating device in the first exemplary embodiment of the present invention. Fig. 2 is a perspective view of a structure of the microwave oven in the first exemplary embodiment of the present invention, and Fig. 3 is a plan view of a door structure.

Main body 1 is provided with opening 8, and door 2 is attached to main body 1 via joint 12 for covering opening 8. Joint 12 is provided along one side of door 2, and thus door 2 is coupled to main body 1 in an openable and closable fashion. Magnetron 7, which generates electromagnetic waves for heating, is built into main body 1 so as to emit electromagnetic waves to cooking space 15 in main body 1. The user opens door 2 and inserts object 9 to be heated for cooking, such as food, from opening 8 into cooking space 15. Wireless IC tag (hereinafter "IC tag") 10 is attached to object 9 to be heated.

Reader 3 configured to read information contained in IC tag 10 is provided on a periphery of door 2. In other words, the periphery of door 2 is a placement area for reader 3. Barrier 5 is provided on the periphery of door 2 at an inner side of reader 3. Controller 6 controls the turning on and off of magnetron 7, magnitude of output power, operation time, and so on based on information read by reader 3. Controller 6 also receives a detection result of opening and closing sensor (hereinafter "sensor") 4 provided near opening 8.

Main body 1 and door 2 are made of metal such as stainless steel or painted sheet steel. Joint 12 is configured with mechanical components such as a hinge. Magnetron 7 includes a magnetron that generates electromagnetic waves typically at the frequency of 2.45 GHz.

IC tag 10 is configured with an IC chip and an antenna connected to the IC chip. IC tag 10 does not contain any power source such as a battery, since the power is supplied from electric waves generated by reader 3 when IC tag 10 enters an electric wave area of reader 3. The antenna is configured, for example, by attaching a copper foil to a thin resin sheet such as an acrylic sheet. ROM or nonvolatile RAM is used for the IC chip. Since electric waves from reader 3 contain a command, IC tag 10 returns data, including an individual ID, from its antenna to reader 3 in response to the command. When IC tag 10 is used for the microwave oven as in this exemplary embodiment, information on cooking methods such as heating time and heating power of electromagnetic waves is written in the IC chip in advance. IC tag 10 transmits these pieces of information together with the individual ID.

Reader 3 is configured with an antenna and processing circuits such as an RF unit , an RF controller, and a host interface. The RF unit is a communicating circuit for sending and receiving electric waves to and from IC tag 10. There are a wide variety of general wireless IC tag readers for short to long communication ranges which are determined by transmission power and antenna size. For the purpose of this exemplary embodiment, wireless IC tag readers for a communication range of several centimeters to several tens of centimeters are suitable.

Reader 3 may be configured only with the antenna, and a separate processing circuit can be provided independently. In Figs. 2 and 3, the antenna of reader 3 is straight, but it may also be C-shaped, L-shaped, or squared along the periphery of door 2. One example of IC tag 10 and reader 3 is disclosed in Japanese Patent Unexamined Publication No. 2001-317741.

Barrier 5 has a choke structure in which a choke hollow is formed in a clearance between door 2 and main body 1 by bending a metal sheet such as stainless steel. Alternately, barrier 5 may have a structure of a metal protrusion, and a groove that receives this protrusion is formed around opening 8 of main body 1. Still another, a material with small voids, such as sponge metal and metal wool, may be used for barrier 5. If the frequency of electromagnetic waves from magnetron 7 is 2.45 GHz, voids of 1.4 mm or smaller are acceptable. Barrier 5, which has one of the above structures, shields reader 3 from electromagnetic waves for heating emitted by magnetron 7. There is no restriction in a type of metal used for barrier 5.

Sensor 4 is typically configured with a push switch, a combination of a lamp and an infrared ray sensor, or the like. Controller 6 may be configured with dedicated hardware or a general microcomputer in which control software is installed.

The operation of the microwave oven as configured above for cooking object 9 is described next. First, a user opens door 2 and inserts object 9 to be heated from opening 8 into cooking space 15. At this point, reader 3 reads information written in IC tag 10 and sends it to controller 6. Since barrier 5 is provided on the periphery of door 2 at the inner side of reader 3, the shield for reader 3 is broken when door 2 is opened. Accordingly, barrier 5 does not disturb reader 3 while reader 3 is reading information contained in IC tag 10. Controller 6 sets heating conditions of magnetron 7 based on this information. When controller 6 detects that door 2 is closed, based on the output from sensor 4, controller 6 starts heating object 9 to be heated in accordance with set heating conditions.

In this state, barrier 5 is provided on the periphery of door 2 at the inner side of reader 3. Accordingly, barrier 5 shields reader 3 from electromagnetic waves emitted by magnetron 7 when door 2 is closed. The strong electromagnetic waves used for cooking thus do not reach the outside of barrier 5 when door 2 is closed. In this way, barrier 5 prevents destruction of reader 3.

In general microwave ovens, punched metal is embedded in the window provided in door 2 to prevent leakage of electromagnetic waves outside while permitting visibility of the window. A choke structure is formed around the window so as to prevent leakage of electromagnetic waves to the outside. This structure is, for example, disclosed in Japanese Patent Unexamined Publication No. 2001-267060. Accordingly, the structure shown in Figs. 2 and 3 is achieved by providing reader 3 outside this choke structure in the structure of general microwave ovens. If barrier 5 is provided separately from this choke structure, there is no need to provide barrier 5 on the entire circumference of door 2, as in the case shown in Fig. 3, as long as barrier 5 is provided at least between opening 8 and reader 3 when door 2 is closed.

If reader 3 is installed on door 2, the placement area is often made of metal. In general, metal significantly degrades the performance of reader 3. Accordingly, as shown in Fig. 4, attachment 11 made of a material that does not affect communication between reader 3 and IC tag 10 is preferably provided between reader 3 and door 2 where reader 3 is attached. Attachment 11 is typically configured with resin such as epoxy and polyurethane, or ceramic. A favorable effect on electromagnetic wave communication can be expected by interposing attachment 11 between a metal component and reader 3. This reduces the effect of the door, generally made of metal, ensuring more reliable operation of reader 3. In other words, when door 2 which is the placement area for reader 3 is made of metal, attachment 11 is provided between reader 3 and the placement area so as to prevent this placement area from disturbing communication between reader 3 and IC tag 10. In the same way, when the placement area for reader 3 is around opening 8 of main body 1 when reader 3 is disposed on main body 1, which is detailed later, attachment 11 is also preferably provided between main body 1 made of metal and reader 3.

In Figs. 2 and 3, reader 3 and barrier 5 are disposed on door 2. However, they are not limited to these positions, as long as reader 3 is disposed at a position shielded by barrier 5 from exposure to electromagnetic waves used for cooking. Other positions for reader 3 and barrier 5 are described hereinafter.

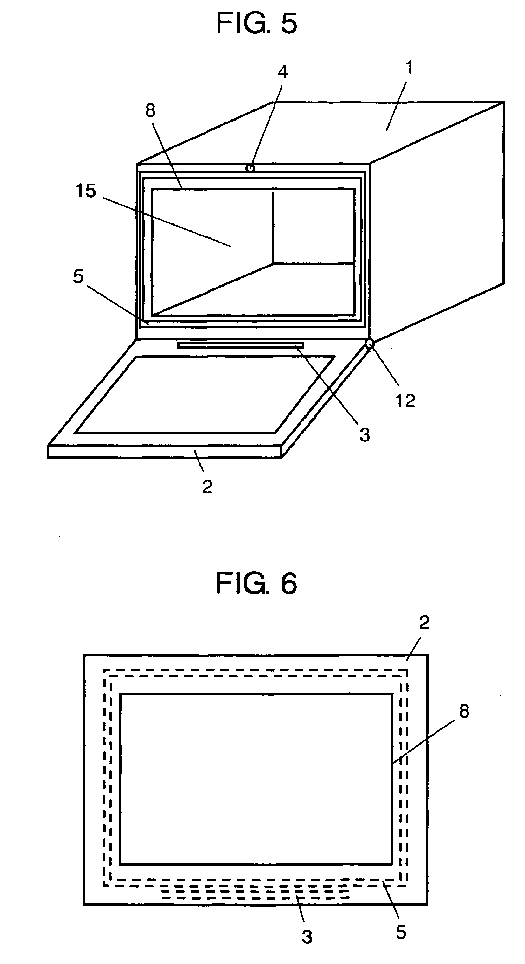

Fig. 5 is a perspective view of another structure of a microwave oven in this exemplary embodiment. Fig. 6 is a perspective plan view of a structure around a door and an opening of the microwave oven shown in Fig. 5 when the door is closed.

The structure shown in Figs. 5 and 6 differs from that shown in Figs. 2 and 3 with respect to the position of barrier 5. More specifically, reader 3 is provided on the periphery of door 2, and barrier 5 is provided around opening 8 of main body 1 at a position which becomes the inner side of reader 3 when door 2 is closed. Also with this structure, barrier 5 shields reader 3 from electromagnetic waves emitted by magnetron 7 when door 2 is closed, and the shield for reader 3 is broken when door 2 is opened. Barrier 5 is preferably provided surrounding opening 8, as shown in Figs. 5 and 6. This structure prevents electromagnetic waves emitted by magnetron 7 from reaching around reader 3.

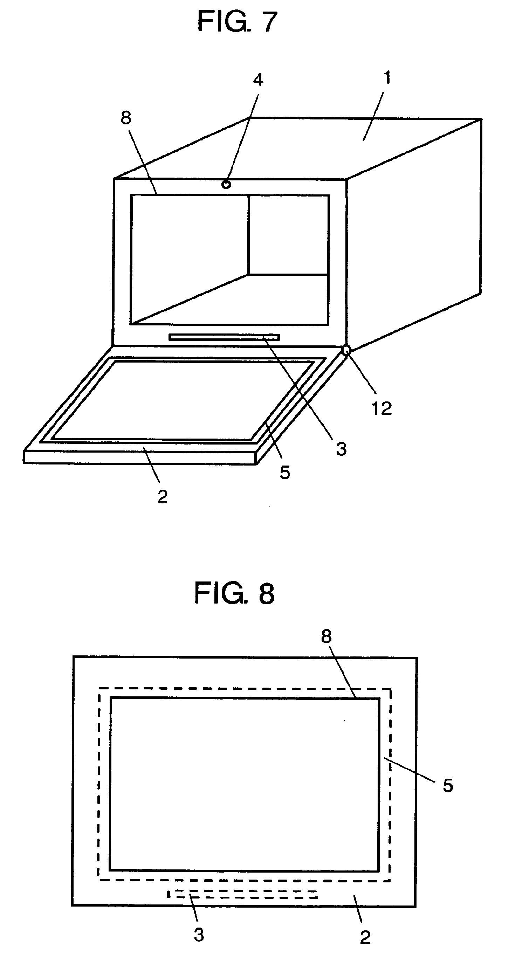

Fig. 7 is a perspective view of still another structure of a microwave oven in this exemplary embodiment. Fig. 8 is a perspective plan view of a structure around a door and an opening of the microwave oven shown in Fig. 7 when the door is closed.

The structure shown in Figs. 7 and 8 differs from that shown in Figs. 2 and 3 with respect to the position of reader 3. More specifically, reader 3 is provided around opening 8 of main body 1. Barrier 5 is provided on the periphery of door 2 at a position which becomes the inner side of reader 3 when door 2 is closed. In other words, an area around opening 8 is the placement area for reader 3 in this structure. Also with this structure, barrier 5 shields reader 3 from electromagnetic waves emitted by magnetron 7 when door 2 is closed, and the shield for reader 3 is broken when door 2 is opened.

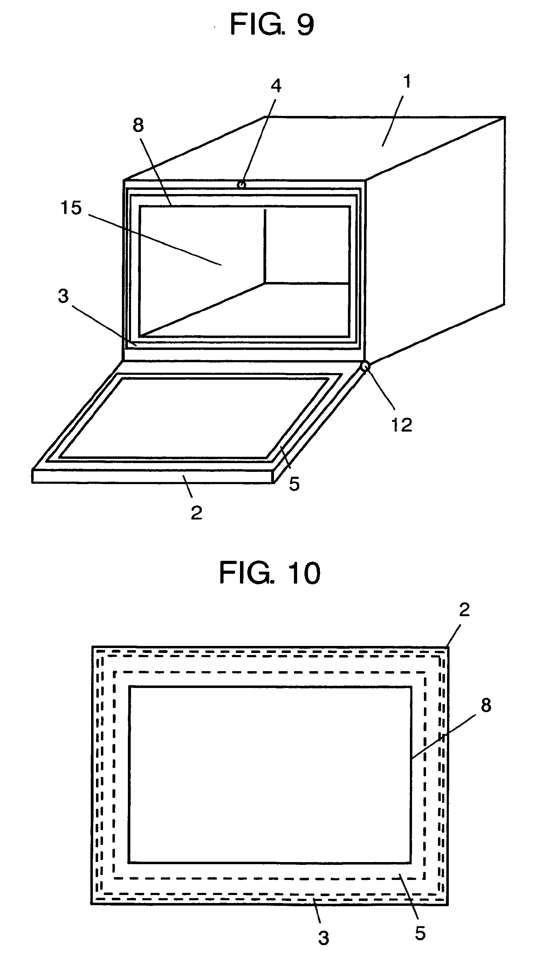

Fig. 9 is a perspective view of still another structure of a microwave oven in this exemplary embodiment. Fig. 10 is a perspective plan view of a structure around a door and an opening of the microwave oven shown in Fig. 9 when the door is closed.

The structure shown in Figs. 9 and 10 differs from that shown in Figs. 7 and 8 with respect to the shape of reader 3. More specifically, reader 3 is provided surrounding opening 8 of main body 1. Barrier 5 is provided on the periphery of door 2 at a position which becomes the inner side of reader 3 when door 2 is closed. Also with this structure, barrier 5 shields reader 3 from electromagnetic waves emitted by magnetron 7 when door 2 is closed, and the shield for reader 3 is broken when door 2 is opened. In addition, since reader 3 surrounds opening 8, reader 3 can reliably read information in IC tag 10 even though object 9 to be heated is inserted into main body 1 from any position.

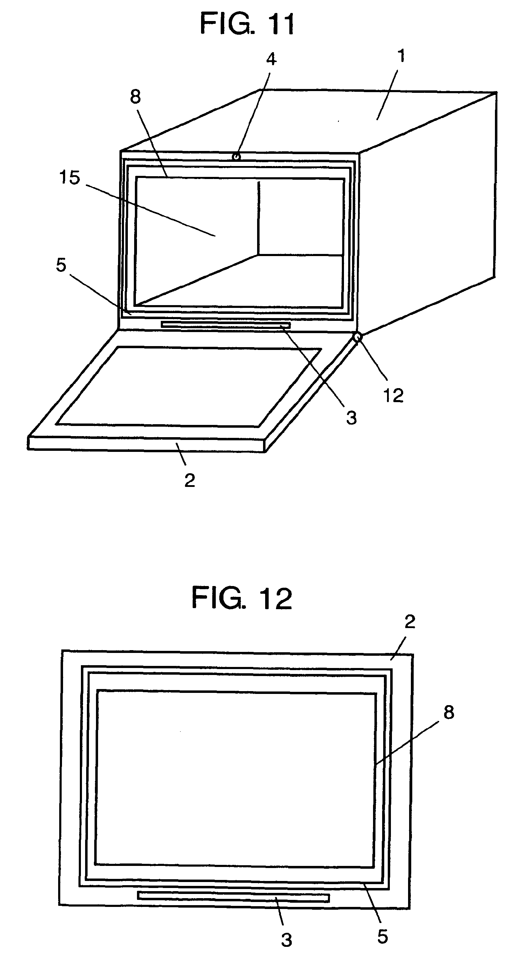

Fig. 11 is a perspective view of still another structure of a microwave oven in this exemplary embodiment. Fig. 12 is a plan view of a structure of an opening of the microwave oven shown in Fig. 11.

The structure shown in Figs. 11 and 12 differs from that shown in Figs. 2 and 3 with respect to the positions of reader 3 and barrier 5. More specifically, reader 3 is provided around opening 8 of main body 1, and barrier 5 is provided around opening 8 at the inner side of reader 3. Also with this structure, barrier 5 shields reader 3 from electromagnetic waves emitted by magnetron 7 when door 2 is closed, and the shield for reader 3 is broken when door 2 is opened. Reader 3 may also be provided surrounding opening 8 of main body 1 in the same way as the structure shown in Figs. 9 and 10.

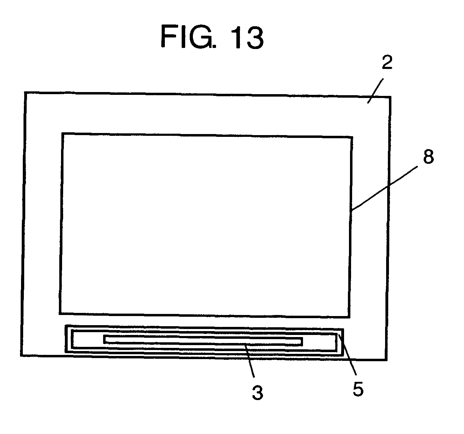

Fig. 13 is a plan view around an opening of a main body in still another structure of a microwave oven in this exemplary embodiment. The structure shown in Fig. 13 differs from that shown in Fig. 12 with respect to the shape and position of barrier 5. More specifically, reader 3 is provided around opening 8 of main body 1, and barrier 5 is provided so as to surround reader 3 and include the inner side of opening 8 with respect to reader 3. Also with this structure, barrier 5 shields reader 3 from electromagnetic waves emitted by magnetron 7 when door 2 is closed, and the shield for reader 3 is broken when door 2 is opened.

As shown in Figs. 2, 5, 7, and 11, reader 3 is preferably provided near joint 12. The area near joint 12 is a part where object 9 to be heated always passes nearby while putting in and taking out object 9 to be heated. Installation of reader 3 in this position further ensures reliable reading of information in IC tag 10 by reader 3. Also in these drawings, joint 12 is provided under opening 8, and door 2 opens and closes vertically. However, the present invention is not limited to this structure. Joint 12 may be provided above opening 8, or at either the left or right side extending vertically.

If door 2 opens horizontally, object 9 to be heated is inserted into main body 1 from the side opposite door 2. For example, if joint 12 is provided along the left side of opening 8, the user opens door 2 with the left hand, and inserts object 9 to be heated into main body 1 with the right hand. In this case, reader 3 is preferably provided around opening 8 on a side opposing the side where joint 12 is provided. This allows object 9 to be heated, to which IC tag 10 is attached, to pass near reader 3, and reader 3 can thus reliably read information in IC tag 10.

Reader 3 is preferably installed near the center of door 2, as shown in Figs. 2, 5, 7, and 11. More specifically, if main body 1 and door 2 are coupled by joint 12, reader 3 is preferably installed on door 2 around the center of a side nearest to joint 12. This results in providing reader 3 at a position furthest from wireless IC tags other than IC tag 10 attached to object 9 to be heated. Accordingly, erroneous reading of any unrelated wireless IC tag nearby is preventable.

### EXAMPLE

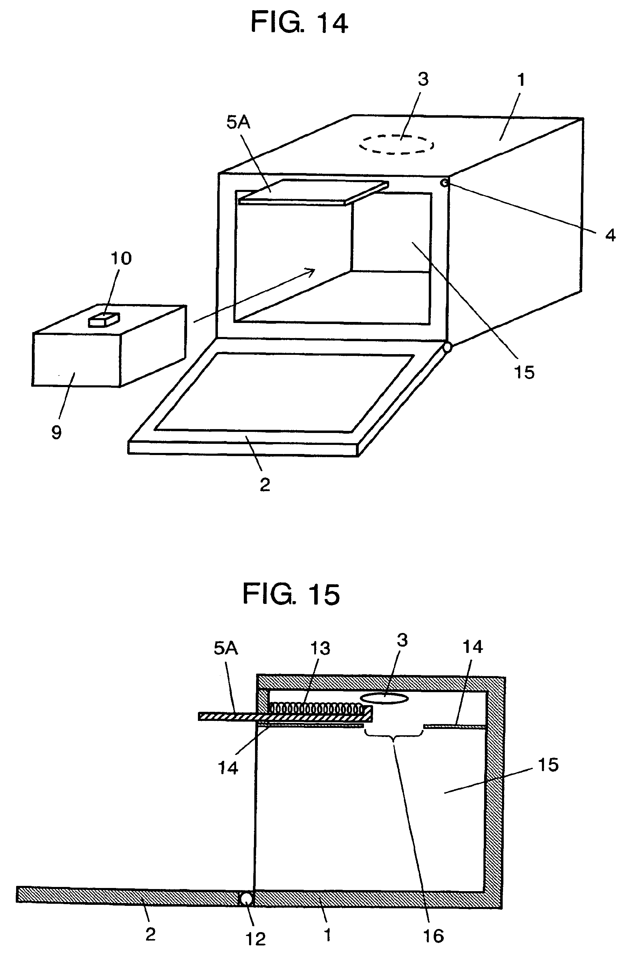

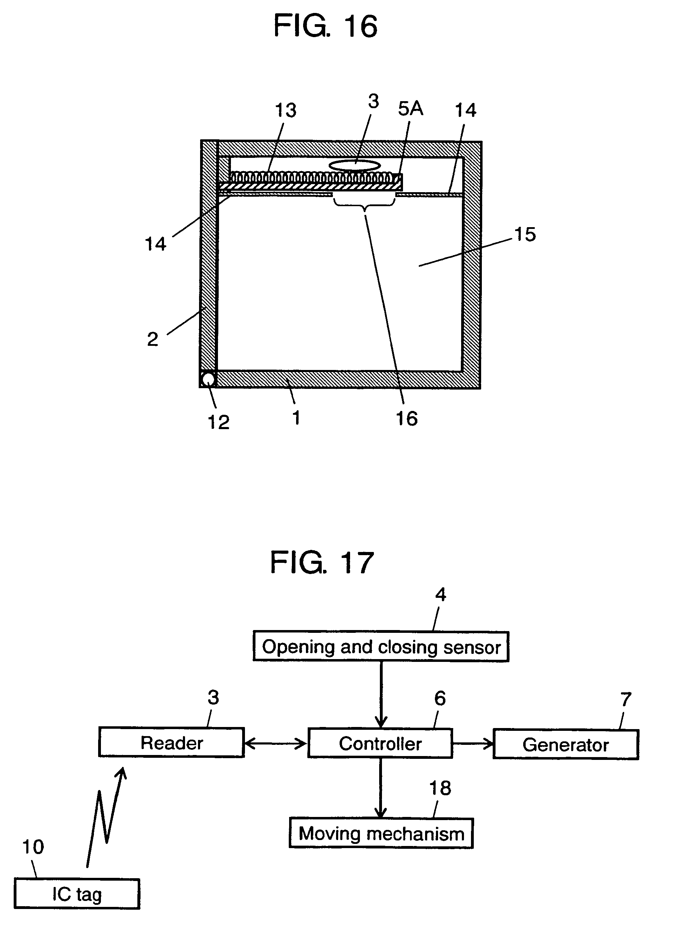

Fig. 14 is a perspective view of a microwave oven which is a heating device in the example embodiment of the present invention. Figs. 15 and 16 are sectional views of the microwave oven shown in Fig. 14 in the states the door is opened and closed, respectively. A functional block diagram is the same as Fig. 1 in the first exemplary embodiment. In other words, this example differs from the first exemplary embodiment with respect to the position of the reader and the structure of the barrier. Other parts are configured the same as that of the first exemplary embodiment, and thus their detailed descriptions are omitted here.

In this example, reader 3 is provided inside main body 1. More specifically, reader 3 is provided at a position isolated from cooking space 15 by partition plate 14 with window 16. Partition plate 14 blocks electromagnetic waves for heating.

Barrier 5A protrudes from main body 1 by the force of spring 13 when door 2 is opened, as shown in Figs. 14 and 15. In this state, reader 3 is exposed to cooking space 15 through window 16, and thus communication with wireless IC tag (hereinafter "IC tag") 10 placed in cooking space 15 of main body 1 is feasible for reading information. On the other hand, as shown in Fig. 16, when door 2 is closed, barrier 5A is pushed by door 2, and spring 13 stretches. This makes barrier 5A move to a position where barrier 5A shields reader 3 from cooking space 15, completely covering window 16. In other words, barrier 5A moves inside main body 1 to a position where barrier 5A shields magnetron 2 from reader 3 when door 2 is closed. As a result, reader 3 is electromagnetically isolated from cooking space 15, and thus electromagnetic waves for heating are not emitted to reader 3, avoiding destruction of reader 3. Accordingly, door 2 and spring 13 move barrier 5A. In other words, door 2 itself configures a moving mechanism for moving barrier 5A to the electromagnetic-wave shielding position.

Barrier 5A is made of a substance with good conductivity, such as metal, or an insulating material such as resin on which typically a layer of conductive carbon or conductive resin is formed. Barrier 5A may also be made of punched metal, same as that used in door 2. The use of such materials for barrier 5A enables shielding of reader 3 from electromagnetic waves emitted by magnetron 7. Partition plate 14 is also preferably made of the same material as barrier 5A so as to further ensure protection of reader 3.

In Figs. 14 to 16, reader 3 is disposed at the top part of main body 1. However, reader 3 is not limited to this position. Reader 3 may be disposed on one of the side faces or the bottom part. Window 16 is preferably provided at a position between an end near opening 8 and the center of main body 1 in a depth direction such that reader 3 can reliably read information in IC tag 10.

In this example embodiment, barrier 5A is moved using door 2 and spring 13. In other words, door 2 itself configures the moving mechanism for moving barrier 5A. However, barrier 5A may be moved using other moving mechanisms. Fig. 17 shows a functional block diagram for another moving mechanism. In this structure, moving mechanism 18 for moving barrier 5A is added to the structure shown in Fig. 1.

Moving mechanism 18 is, for example, an actuator such as a motor for operating barrier 5A, which is provided on main body 1. Controller 6 controls moving mechanism 18 in accordance with an output of opening and closing sensor (hereinafter "sensor") 4, and operates barrier 5A. Moving mechanism 18 may also be configured with a gear which moves in conjunction with opening and closing of door 2.

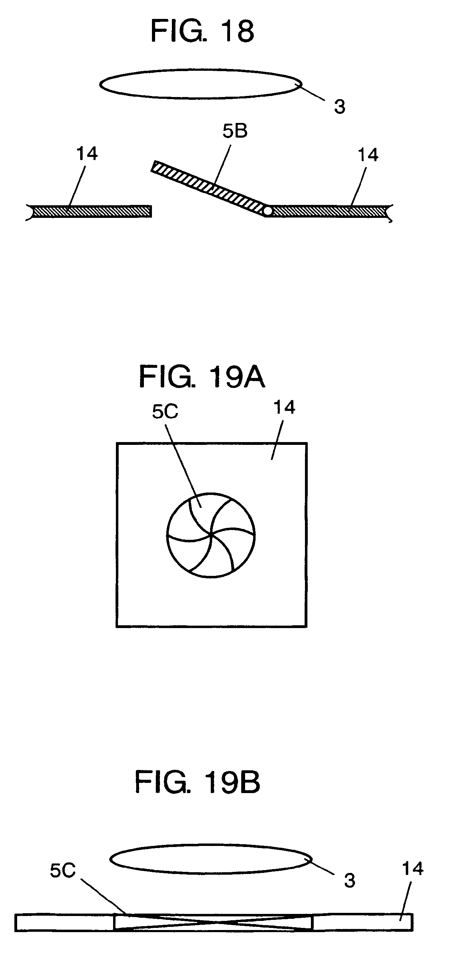

Fig. 15 shows sliding barrier 5A. However, the present invention is not limited to this type. For example, folding barrier 5B shown in a sectional view of Fig. 18 is also applicable. Still further, barrier 5C configured with a rotary sliding hatch, as shown in a plan view of Fig. 19A, is also applicable. Fig. 19B is a sectional view illustrating around reader 3 when barrier 5C is employed. Barriers 5B and 5C are driven by moving mechanism 18.

In the above exemplary embodiment and in the example, controller 6 preferably supplies power to reader 3 only when door 2 is opened by detecting whether door 2 is opened or closed using opening and closing sensor 4. This enables the operation of reader 3 only when it is needed. Accordingly, there is no need to activate reader 3 all the time, thus reducing energy consumption.

The exemplary embodiment and the example are described taking microwave ovens as examples of heating devices. However, the present invention is not limited to microwave ovens. The object to be heated is also not limited to food. The present invention applies to any heating device, even heating devices for chemical experiments, provided an object is heated with electromagnetic waves. The exemplary embodiment described herein is therefore illustrative and not restrictive.

### INDUSTRIAL APPLICABILITY

In the heating device of the present invention, the reader reads information in a wireless IC tag when the door is opened. On the other hand, the barrier protects the reader when the door is closed. This enables the reader to read the information in the wireless IC tag while eliminating any risk of electromagnetic waves for cooking destroying the reader. Accordingly, a user-friendly and highly reliable heating device is achievable.

## Claims

1. A heating device comprising:
a main body (1) provided with an opening (8);
a magnetron (7) configured to generate an electromagnetic wave for heating, wherein the magnetron is further configured to emit the electromagnetic wave into the main body;
a door (2) configured to cover the opening, and further configured to allow placing in and taking out of an object to be heated (9); and
a reader (3) configured to read information contained in a wireless IC tag (10) being attached to the object to be heated;
**characterized in that**
the reader is provided on a placement area in one of a periphery of an inner side of the door and a surrounding area of the opening of the main body;
wherein the heating device further comprises a barrier (5) provided on at least one of the periphery of the inner side of the door and the surrounding area of the opening of the main body;
and wherein the barrier is configured to establish an electromagnetic shield in a clearance between the door and the main body for shielding the reader from the electromagnetic wave, wherein at least a part of the barrier is positioned between the reader and the magnetron when the door is closed;
and wherein the barrier is further configured to break the electromagnetic shield when the door is opened.

2. The heating device according to claim 1, **characterized in that** the reader and the barrier are provided on the door.

3. The heating device according to claim 1, **characterized in that** the reader is provided on the door, and the barrier is provided on the main body.

4. The heating device according to claim 1, **characterized in that** the reader is provided on the main body, and the barrier is provided on the door.

5. The heating device according to claim 1, **characterized in that** the reader and the barrier are provided on the main body.

6. The heating device according to claim 4 or 5, **characterized in that** the reader is provided surrounding the opening.

7. The heating device according to claim 1, **characterized by** further comprising an attachment (11) provided between the reader and the placement area, if the placement area is made of metal.

8. The heating device according to claim 1, **characterized by** further comprising a joint (12) configured to couple the door and the main body, wherein the reader is provided at the side of the door or of the main body where the joint is located.

9. The heating device according to claim 1, **characterized by** further comprising a moving mechanism (18) configured to move the barrier to a position to shield the reader from the magnetron in the main body when the door is closed.

10. The heating device according to claim 1, **characterized by** further comprising:
an opening and closing sensor (4) configured to detect opening and closing of the door, and
a controller (6) configured to supply power to the reader only when the door is opened.

## Patentansprüche

1. Heizvorrichtung, umfassend:
einen Hauptkörper (1), der mit einer Öffnung (8) versehen ist;
ein Magnetron (7), das dazu eingerichtet, ist eine elektromagnetische Welle zum Erwärmen zu erzeugen, wobei das Magnetron weiterhin dazu eingerichtet ist, die elektromagnetische Welle in den Hauptkörper zu emittieren;
eine Tür (2), die dazu eingerichtet ist, die Öffnung zu verdecken, und weiterhin dazu eingerichtet ist, das Einbringen und das Entnehmen eines zu erwärmenden Gegenstandes (9) zuzulassen; und
eine Leseeinrichtung (3), die dazu eingerichtet ist, Informationen zu lesen, die in einem Drahtlos-IC-Etikett (10) enthalten sind, das an dem zu erwärmenden Gegenstand angebracht ist;
**dadurch gekennzeichnet, dass**
die Leseeinrichtung an einer Stellfläche entweder an einem Rand einer Innenseite der Tür oder einem umgebenden Bereich der Öffnung des Hauptkörpers angebracht ist;
wobei die Heizvorrichtung weiterhin eine Barriere (5) enthält, die an dem Rand der Innenseite der Tür und/oder dem umgebenden Bereich der Öffnung des Hauptkörpers vorgesehen ist;
und die Barriere dazu eingerichtet ist, eine elektromagnetische Abschirmung in einem Zwischenraum zwischen der Tür und dem Hauptkörper einzurichten, um die Leseeinrichtung von der elektromagnetischen Welle abzuschirmen, wobei wenigstens ein Teil der Barriere zwischen der Leseeinrichtung und dem Magnetron angeordnet ist, wenn die Tür geschlossen ist;
und die Barriere weiterhin dazu eingerichtet ist, die elektromagnetische Abschirmung zu durchbrechen, wenn die Tür geöffnet ist.

2. Heizvorrichtung nach Anspruch 1, **dadurch gekennzeichnet, dass** die Leseeinrichtung und die Barriere an der Tür vorgesehen sind.

3. Heizvorrichtung nach Anspruch 1, **dadurch gekennzeichnet, dass** die Leseeinrichtung an der Tür vorgesehen ist und die Barriere an dem Hauptkörper vorgesehen ist.

4. Heizvorrichtung nach Anspruch 1, **dadurch gekennzeichnet, dass** die Leseeinrichtung an dem Hauptkörper vorgesehen ist und die Barriere an der Tür vorgesehen ist.

5. Heizvorrichtung nach Anspruch 1, **dadurch gekennzeichnet, dass** die Leseeinrichtung und die Barriere an dem Hauptkörper vorgesehen sind.

6. Heizvorrichtung nach Anspruch 4 oder 5, **dadurch gekennzeichnet, dass** die Leseeinrichtung die Öffnung umgebend vorgesehen ist.

7. Heizvorrichtung nach Anspruch 1, **dadurch gekennzeichnet, dass** sie weiterhin ein Anbauteil (11) enthält, das zwischen der Leseeinrichtung und der Stellfläche vorgesehen ist, sofern die Stellfläche aus Metall besteht.

8. Heizvorrichtung nach Anspruch 1, **dadurch gekennzeichnet, dass** sie weiterhin ein Scharnier (12) enthält, das dazu eingerichtet ist, die Tür und den Hauptkörper zu verbinden, wobei die Leseeinrichtung auf der Seite der Tür oder des Hauptkörpers vorgesehen ist, wo sich das Scharnier befindet.

9. Heizvorrichtung nach Anspruch 1, **dadurch gekennzeichnet, dass** sie weiterhin einen Bewegungsmechanismus (18) enthält, der dazu eingerichtet ist, die Barriere in eine Position zu bewegen, um die Leseeinrichtung von dem Magnetron in dem Hauptkörper abzuschirmen, wenn die Tür geschlossen ist.

10. Heizvorrichtung nach Anspruch 1, **dadurch gekennzeichnet, dass** sie weiterhin enthält:
einen Öffnungs- und Schließsensor (4), der dazu eingerichtet ist, das Öffnen und Schließen der Tür zu erfassen, und
eine Steuereinheit (6), die dazu eingerichtet ist, der Leseeinrichtung nur dann Strom zuzuführen, wenn die Tür geöffnet ist.

## Revendications

1. Dispositif de chauffage comprenant :
un corps principal (1) muni d'une ouverture (8) ;
un magnétron (7) configuré pour générer une onde électromagnétique de chauffage,
dans lequel le magnétron est configuré en outre pour émettre l'onde électromagnétique dans le corps principal,
une porte (2) configurée pour recouvrir l'ouverture et configurée en outre pour permettre d'y placer et d'en retirer un objet destiné à être chauffé (9) ; et
un lecteur (3) configuré pour lire des informations contenues dans une étiquette à CI sans fil (10) fixée à l'objet à chauffer ;
**caractérisé en ce que**
le lecteur est disposé sur une zone de placement dans la périphérie de la face interne de la porte ou dans une zone entourant l'ouverture du corps principal ;
dans lequel le dispositif de chauffage comprend en outre une barrière (5) disposée au moins sur la périphérie de la face interne de la porte ou la zone entourant l'ouverture du corps principal ;
et dans lequel la barrière est configurée pour constituer un blindage électromagnétique dans l'espace compris entre la porte et le corps principal pour protéger le lecteur de l'onde électromagnétique, dans lequel au moins une partie de la barrière est positionnée entre le lecteur et le magnétron lorsque la porte est fermée ;
et dans lequel la barrière est configurée en outre pour rompre le blindage électromagnétique lorsque la porte est ouverte.

2. Dispositif de chauffage selon la revendication 1, **caractérisé en ce que** le lecteur et la barrière sont disposés sur la porte.

3. Dispositif de chauffage selon la revendication 1, **caractérisé en ce que** le lecteur est disposé sur la porte et la barrière est disposée sur le corps principal.

4. Dispositif de chauffage selon la revendication 1, **caractérisé en ce que** le lecteur est disposé sur le corps principal et la barrière est disposée sur la porte.

5. Dispositif de chauffage selon la revendication 1, **caractérisé en ce que** le lecteur et la barrière sont disposés sur le corps principal.

6. Dispositif de chauffage selon la revendication 4 ou 5, **caractérisé en ce que** le lecteur est disposé autour de l'ouverture.

7. Dispositif de chauffage selon la revendication 1, **caractérisé en ce qu'**il comprend en outre une fixation (11) disposée entre le lecteur et la zone de placement, si la zone de placement est faite en métal.

8. Dispositif de chauffage selon la revendication 1, **caractérisé en ce qu'**il comprend en outre un joint (12) configuré pour coupler la porte et le corps principal, dans lequel le lecteur est disposé sur la face de la porte ou du corps principal où est situé le joint.

9. Dispositif de chauffage selon la revendication 1, **caractérisé en ce qu'**il comprend en outre un mécanisme de déplacement (18) configuré pour déplacer la barrière jusqu'à une position protégeant le lecteur du magnétron dans le corps principal lorsque la porte est fermée.

10. Dispositif de chauffage selon la revendication 1, **caractérisé en ce qu'**il comprend en outre :
un capteur d'ouverture et de fermeture (4) configuré pour détecter l'ouverture et la fermeture de la porte, et
un contrôleur (6) configuré pour fournir de l'énergie au lecteur uniquement lorsque la porte est ouverte.
